# EUROPEAN PATENT SPECIFICATION

(11) **EP 0 725 264 B1**
(45) Date of publication and mention of the grant of the patent: **05.06.2002**
(21) Application number: 96500016.9
(22) Date of filing: 02.02.1996
(51) Int. Cl.: G01M 3/28

(54) **Faulty joints detecting machine in pressurized gas containers**
Maschine zur Aufspürung von fehlerhaften Verbindungen in Druckgasbehältern
Machine de détection de joints défectueux dans des récipients à gaz pressurisé

(30) Priority: 06.02.1995 ES 9500328
(43) Date of publication of application: 07.08.1996
(73) Proprietor: REPSOL BUTANO, S.A., 28015 Madrid (ES)
(72) Inventor: Méndez Rutllán, Andrés, E-28199 Madrid (ES); Antunez Jiménez, José, E-28028 Madrid (ES)
(74) Representative: Riera Blanco, Juan Carlos

(56) References cited:
- FR-A- 2 458 064
- US-A- 3 805 593

## Description

### OBJECT OF THE INVENTION

The object of the present invention is constituted by a FAULTY JOINTS DETECTING MACHINE IN PRESSURIZED GAS CONTAINERS, specially applicable to the detention of faults originated as consequence of the use, or for any other reason, in the sealing joints of the oil liquefied gas containers.

### BACKGROUND OF THE INVENTION

The faulty joints detecting machine which is going to be the object of description represents a very important novelty in reference to the present state of the art, producing essential characteristics of novelty and outstanding advantages on the means used at present for this same purpose.

It is well know the existence of oil liquefied gas containers, of a sealing joint located in the outside around the neck of the gas outlet valve, intended to hermetically seal the link between the regulator for domestic use and the valve itself, in such a way that between both elements the sealing conditions are established which avoid the possibility that unwanted gas leaks may be produced toward the outside.

Up to now, the testing of such joints was visually carried out, in such a way that an operator, located in a given position of the filling line, was able to verify the state of such joint, and when a faulty one was found, the container was taken out for the substitution of the faulty joint by a new one.

This method is, by no means, free of errors, since it definitively depends on the response capacity of the operator responsible of carrying out this function.

An apparatus for automatically detecting faulty joints in pressurized gas containers is known from FR-A-2458064.

The invention has developed a machine that favourably solve the problem raised, supposing an important novelty in reference to the methods used, bringing forward the automatic verification means not only for the mentioned joint but also for some faults that may affect the gas outlet valve itself.

### DESCRIPTION OF THE INVENTION

The machine suggested by the present invention starts up with the preferably automatic feeding of the containers, by means of a conveyor belt or line. The position of the containers which joint has to be verified, is being detected by a set of sensors conveniently distributed along their run, in such a way that the mentioned sensors act on the braking/release means of each container both at the beginning of the cycle as well as when it reaches the joint verification position.

The machine itself is constructed starting from a support structure, preferably metallic, on which it is arranged a platform equipped with guiding means of lowering/rising movable device which comprises a support base with two shafts in diametrically opposed positions to which an analysis bell is held in a lower position against the action of both springs.

The above mentioned analysis bell is susceptible of receiving in the inside the valve of the container properly positioned under the same, reproducing the working conditions in which such gas container usually is subjected to when is being used by the user, in such a way that the measured degree of sealing between such belt and such valve determines whether the joint is faulty or not, by which after a predetermined period of time has passed, the analysis bell is withdrawn and the container in question is sent by the rejection route or by the one of acceptance according to the result of the measuring carried out.

The invention has foreseen testing pressure regulating means and the period of time that has to pass in each one of the foreseen operations.

### BRIEF DESCRIPTION OF THE DRAWINGS

It has been shown in the drawing accompanying the present description, as an example and therefore without limiting character, a preferred embodiment of the object of the invention. In such drawings:
- Figure 1: shows a frontal elevation view of the machine of the invention.
- Figure 2: is a lateral elevation view of the machine object of the description, with a gas container properly positioned.
- Figure 3: shows an upper plan view of the machine according to Figure 2.
- Figure 4: is an schematic view of an installation for the testing of faulty joints, in which the relative position of the different sensors and means of braking/release of the containers are represented.

### PREFERRED EMBODIMENT OF THE INVENTION

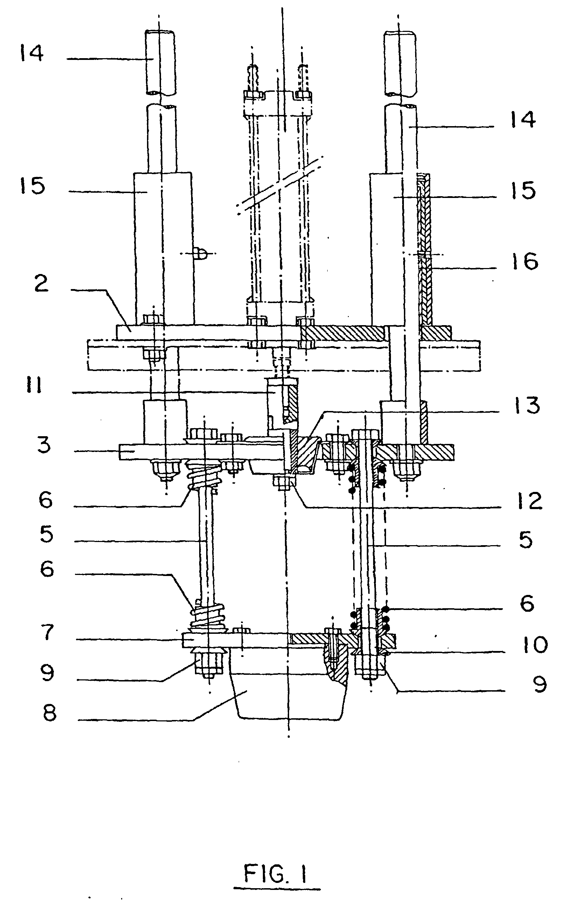

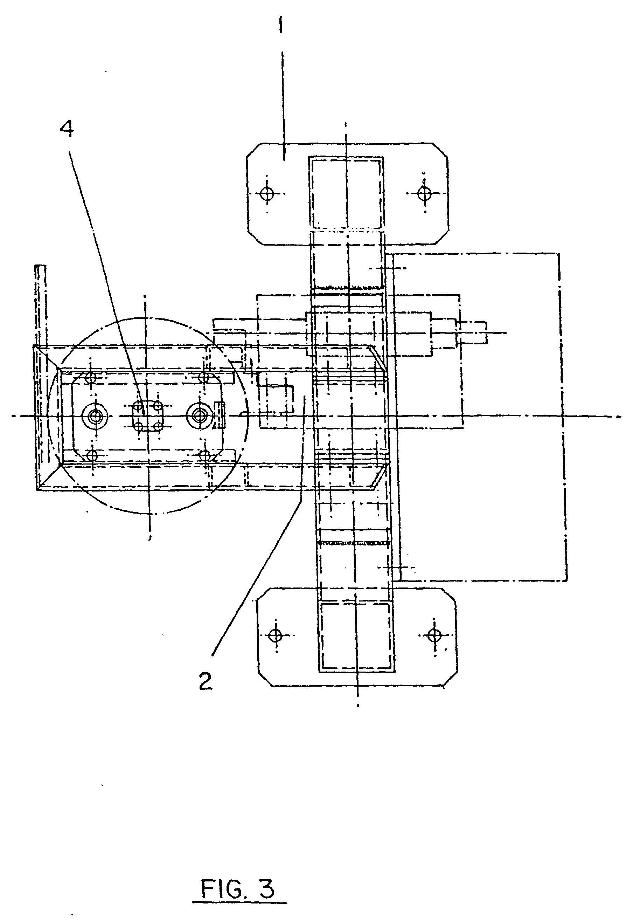

With the purpose of facilitating the understanding of the object of the invention, the following detailed description of the preferred embodiment will be made based on the accompanying drawings. Making reference to Figures 1 to 3 of such drawings, it is shown that the machine has been constructed starting from a structure (1) preferably metallic from which a guiding platform (2) rises perpendicularly from a lowering/rising movable assembly formed by a support base (3), a piston (4), two shafts (5) in diametrically opposed position and pressed on to the appropriate springs (6), and a support plate (7) of the analysis bell (8). The linking of the shaft (5) to the support plate (7) is carried out by means of appropriate nuts (9) and between each shaft (5) and its associate spring (6) a concentric separator (10) has been arranged with both mentioned elements, which serves at the same time as guiding means of each spring (6).

The shaft (11) of the cylinder (4) is jointly held to the support base (3) by nuts (12) and through an appropriate support conical piece (13). On the other hand, the support base (3) is oriented in its lowering/raising displacement by two lateral shafts (14) housed in cylindrical guiding elements (15) which at the same time have bearings (16) inside which facilitate the displacement of such shafts (14).

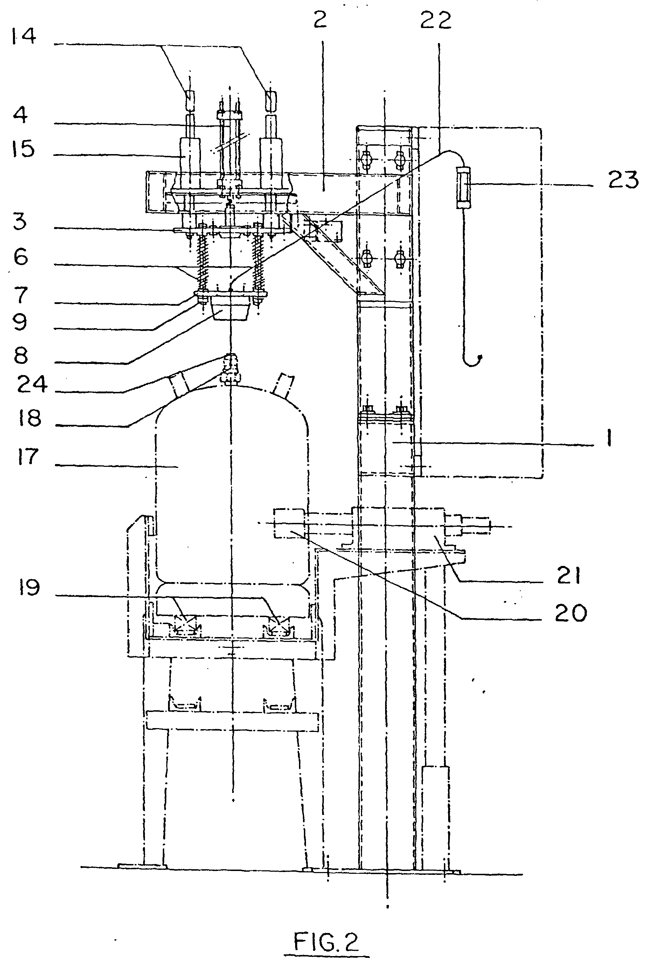

It can also be seen in Figure 2 the location of the container (17) equipped with its corresponding valve (18) confronted to the mentioned analysis bell (8), equipped with the sealing joint (24), and being such container located on a conveyor belt (19) and braking in such position by means of a brake device (20). Such braking device (20) is susceptible of being displaced thanks to a cylinder (21), being the displacement movement of the braking device (20) transversal to the movement direction of the container (17). Likewise, in this same Figure 2 it is also shown that from the analysis bell (8) a duct (22) starts up by which a pressure is supplied to the internal chamber of such bell, also having foreseen a flowmeter (23) associated to the mentioned duct (22).

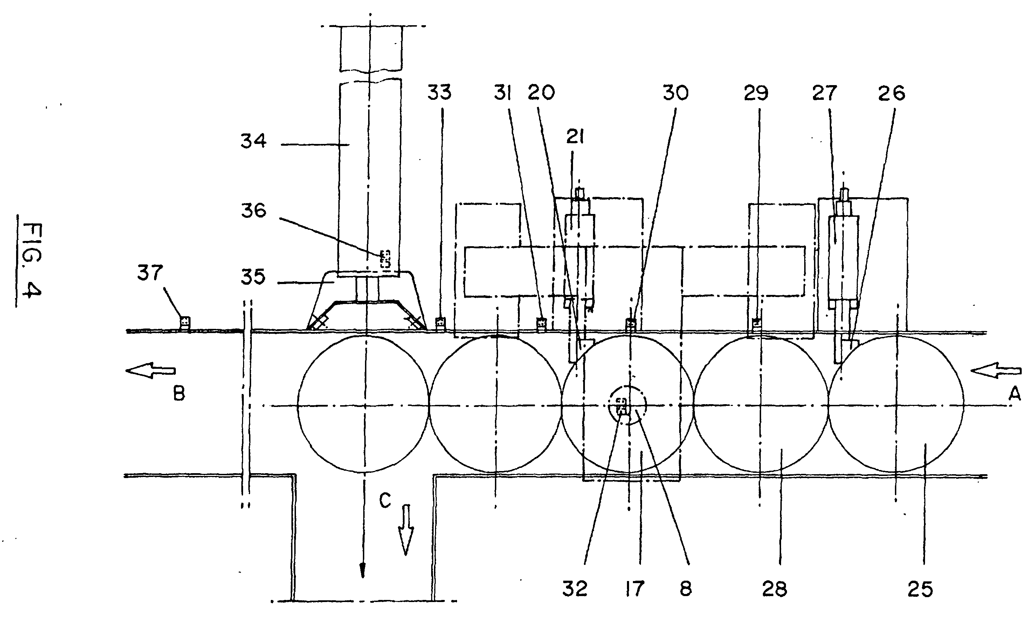

The running of the machine is controlled by a set of sensors which position and sequential functioning will be explained in reference to Figure 4 of the drawings. Nevertheless, with all that has been explained up to now and referring basically to Figure 2, any expert in the subject may perfectly deduced the functioning of the machine.

Once the container (17) has been placed in the position shown in Figure 2, it is retained by the braking device (20) which is in the extended position, driven by the cylinder (21). In this position, the valve (18) is confronted to the analysis bell (8). Since the position of the container (17) is being detected by the corresponding sensor, the machine determines the lowering of the movable assembly previously mentioned using for this action the cylinder (4). Thus the valve (18) of the container (17) is housed inside the inner chamber of the bell (8) and an internal seat of such bell (8) stays positioned against the upper edge of the mentioned joint (24), exercising a predetermined pressure on it. In these conditions, the bell (8) easily reproduces the coupling and sealing conditions between the regulator of domestic use and the container valve, in such a way that the internal chamber of the bell is supplied with a given pressure, during an specific period of time, through the duct (22) and the sealing conditions are analyzed. If after this period of time it is not produced any drop in the pressure value, the sealing of the joint is ensured and the movable assembly is displaced upwardly, dragged by the cylinder (4), by which the valve (18) of the container (17) is liberated. Once the raising of such movable assembly is finished, the braking device (20) is withdrawn driven by the cylinder (21) associated thereof, and the container (17) is dragged by the conveyor belt (19) in the direction of the valid containers, passing a second container to occupy the position of the previous one to be submitted to the same test, starting the cycle again.

If, on the contrary, after applying the pressure to the internal chamber of the bell (8) during the established period of time it is detected a drop of any magnitude in the pressure value originated either by a faulty joint or by any other inherent fault to the joint itself, as in the previous case the movable assembly driven by the cylinder (4) will raise, separating the bell (8) of the valve (18) from the container (17), the brake (20) will be withdrawn by the cylinder (21) and the container (17) will be dragged by the conveyor bell (19), until such container (17) reaches a given position in which the brake is applied again (as it will be seen in reference to Figure 4), and pushed by a transversal arm up to a second conveyor belt which drags it in the direction of the containers which appear as faulty for any of the reasons above mentioned.

Then making reference to Figure 4 of the drawings it is seen a schematic representation of the running sequence foreseen for the machine of the invention. Accordingly, the different steps of the process are represented in this figure to which each container is submitted with the purpose of checking the state of sealing of its joint. Thus, according to the drawing, the containers have access to the machine according to the direction pointed out by the arrow A, dragged by the already mentioned conveyor belt. Initially, the first container (25) finds in its displacement a braking device (26) in an extended position transversally to the dragging direction of the containers, by which the brake is applied to the container (25). It has been foreseen in the machine a conventional circuit breaker for run/face passage/stop, which is not represented, in such a way that when driving this circuit breaker and regulating it to the "run" position, the cylinder (27) acts on the brake (26), withdrawing such brake and makes way to the container (25). When such container (25) reaches the position (28) activates a sensor when passing (29) by which the brake (26) relaxes and is withdrawn again to make way to a second container, after which it relaxes again to apply the brake on the rest of the containers which are dragged by the conveyor belt. In these conditions, the first container (25) will have reached the analysis position (17), activating a sensor (30) and being retained in such position by the brake (26), while a second container will be in the position (28), in a stand by condition, retained by the first container (17). Logically, the distance between both already mentioned brakes (26) and (20) will be such that allows the placing of two containers in the way represented in the drawing.

The machine will have at the same time a conventional circuit breaker for the functions of cycle/emergency, which are not represented. After manually acting on this circuit breaker and regulating it to the "cycle" position and activating a "starting cycle" push bottom not shown, it will start the verification automatic sequence of the state of the joint (24) as it has been explained in reference to Figures 1 to 3.

If the result of the joint analysis (24) has been positive, that is, the sealing conditions measured between the seat of the bell (8) and the joint (24) are the ones required, the movable assembly will rise driven by the cylinder (4), activating a sensor in its run (32) which will generate the opening command of the brake device (20) by which the container (17) is liberated and dragged by the conveyor belt, in such a way that the container (28) which was in the stand by condition will occupy the position in which the container was placed (17) for the analysis of the respective joint. This new container will be equally retained by the braking device (20) since when the container (17) is dragged by the conveyor belt will activate a sensor (31) placed immediately after such brake (20), restarting again all the described cycle at the time that the new container, on arriving to the analysis position, activates the sensor (30). The containers in which the state of the joint were verified and are correct, are transported by the conveyor belt in the direction pointed out by the arrow B.

In the case that in the analysis carried out there is an indication that the container joint is faulty because the internal chamber of the bell (8) has not reached the required pressure, and a given period of time has passed a signal will be generated for the faulty container, in such a way that the movable assembly will rise dragged by the cylinder (4), the container with the faulty joint will be liberated by the braking device (20) and will be dragged by the conveyor belt, in such a way that when acting upon the sensor (31) the brake will be extended again (20), stopping the corresponding container. Nevertheless, the container with faulty joint which was liberated, will reach in its run the position of a sensor (33) which will verify the situation of this container against an expelling device formed by a cylinder (34) and a pushing arm (35). Once the location of the faulty container is verified in front of the mentioned expeller device, the cylinder (34) will extend the pushing arm (35) in order to divert such faulty container towards another conveyor belt in the direction of the arrow C. In these conditions the braking device (20) is extended and the whole cycle remains inhibited until the pushing arm is withdrawn to its resting position, this condition is detected by a sensor (36), at that time the whole cycle starts again.

The assembly will eventually have available the detection means for possible blockage in the outlet of the conveyor belt, which preferably will consist of a sensor (37) located in a predetermined position along the run of the containers according to the direction B, such as when this sensor is activated by one of the containers during a preestablished time, all the cycle remains inhibited, restarting again only after such sensor (37) has been deactivated.

On the other hand, the invention has foreseen that the unit includes a pulse counter with manual regulation to zero, preferably of pneumatic type, placed in a given position along the path C, with the purpose of counting the number of faulty containers which are rejected by the machine.

In the previous description it has only been taken into consideration the fact that the fault is found in the sealing joint and that for this reason the required pressure may not be reached in the internal chamber of the analysis bell. Nevertheless, this condition of lack of pressure can also be originated by the defects in the gas outlet valve itself, in which case the containers will be equally expelled in the direction C.

The machine will also incorporate other devices such as pressure regulators, manometers, timers, etc., intended to establish and control the working conditions thereof, and which are not described because they are of conventional type. Likewise, the cylinder used can be of pneumatic or hydraulic type, according to the requirements of each particular case.

## Claims

1. An apparatus for detecting faulty joints in pressurized gas containers, specially for oil liquefied gas containers, particularly suitable for its use in filling automatic installations the apparatus comprising a conveyor belt on which the containers with the joints to be checked are placed, the apparatus further comprising a rigid structure (1) which in its upper part comprises a horizontal guiding platform (2) on top of which are placed two cylindrical pieces (15) equipped with interior bearings (16) for guiding two vertically displaceable shafts (14) of a movable assembly further comprising a support base (3) attached to the lower ends of said shafts (14), rods or spindles (5) held by their upper parts to said support base (3) each one being pressed on a concentric separator (10) and on a concentric spring (6), a support plate (7) held to the lower ends of said rods or spindles (5) against the action of said springs (6), and an analysis bell (8) connected to said support plate (7), the movable assembly being arranged to be lowered and risen by a pneumatically or hydraulically driven cylinder (4) supported by said platform (2), the shaft (11) of said cylinder being connected to said support base (3).

2. An apparatus for detecting faulty joints in pressurized gas containers, according to claim 1, **characterized in that** the mentioned analysis bell (8) has an internal chamber in which it is located a valve carrier of the joint (24) to be tested, in such a way that an internal seat of such bell (8) remains positioned against the upper edge of the mentioned joint (24), the analysis bell (8) also having an external duct, with its corresponding flowmeter, by which it is supplied to the internal chamber of the analysis bell (8) the necessary pressure for the testing of the sealing provided by the mentioned joint (24).

3. An apparatus for detecting faulty joints in pressurized gas containers, according to claim 1, **characterized in that** two braking devices have been provided formed by two cylinders (27, 21) pneumatically or hydraulically driven equipped with both arms (26, 20) transversally extendable in the direction of the displacement of the containers, being these braking devices separated by a distance that approximately is equal to the space occupied by two containers (17) when placed on the conveyor belt (19), and one (26) of such brakes having been provided to determine the admission of new containers while the second brake (20) has been provided to hold the container (17) which joint is being tested.

4. An apparatus for detecting faulty joints in pressurized gas containers, according to claim 3, **characterized in that** the action of such braking devices (26, 20) is regulated by specific sensors which are activated by the passage of the containers themselves along their run.

5. An apparatus for detecting faulty joints in pressurized gas containers, according to one or more of the previous claims, **characterized in that** besides being equipped with expelling mechanism formed by a cylinder (34) pneumatically and hydraulically driven, provided with a pushing arm (35), operable after the analysis bell (8) has detected a faulty joint (24) and when the container (17) carrier of such faulty joint has activated a sensor (33) indicating that such container (17) is positioned in front of the mentioned expelling mechanism, by which the pushing arm (35) is extended and diverts such container towards the foreseen path for such containers, being inhibited the assembly while the container with a faulty joint is diverted and restarting again the cycle when the pushing arm (35) has returned to its resting position.

6. An apparatus for detecting faulty joints in pressurized gas containers, according to one or more of the previous claims, **characterized in that** it is equipped with a detecting blockages sensor (37) which stops all the assembly while the blockage condition persists.

## Patentansprüche

1. Apparat zur Erkennung defekter Dichtungen bei Druckgasbehältern, insbesondere bei Druckgasbehältern für flüssige Gase auf Erdölbasis, der besonders geeignet ist für automatische Abfülleinrichtungen. Dieser Apparat beinhaltet ein Transportband, auf dem die Behälter mit den zu untersuchenden Dichtungen aufgestellt werden, wobei der Apparat desweiteren aus einer festen Struktur (1) besteht, welche an ihrem oberen Teil eine Plattform für horizontale Lenkung (2) aufweist, über der zwei zylindrische Teile (15) angebracht sind, die innere Lager (16) aufweisen, die dazu dienen sollen, zwei Achsen einer beweglichen Einheit zu manövrieren, die sich in vertikaler Richtung bewegen (14). Die bewegliche Einheit weist ferner eine Auflagebasis (3) auf, die an den unteren Enden der erwähnten Achsen (14) angebracht ist, Stangen oder Spindel (5), die an ihren oberen Enden an der erwähnten Auflagebasis (3) befestigt sind und die allesamt durch Druck in einer konzentrischen Trennvorrichtung (10) angebracht sind, sowie eine konzentrische Feder (6) und eine Auflage-platte (7), welche an den äussersten unteren Enden der oben genannten Stangen oder Spindel (5) befestigt sind und der Wirkung der erwähnten Federn (6) entgegen-wirken. Desweiteren existiert eine Analyseglocke (8), die mit der Auflagebasis (7) verbunden ist, wobei der bewegliche Teil in der Lage ist, sich aufwärts oder abwärts zu bewegen mithilfe eines hydraulisch oder pneumatisch aktivierten Zylinders (4), der von der erwähnten Plattform (2) festgehalten wird. Die Achse (11) des Zylinders ist mit der Auflageplattform (3) verbunden.

2. Apparat zur Erkennung defekter Dichtungen bei Druckgasbehältern nach Anspruch 1, **dadurch gekennzeichnet, dass** die erwähnte Analyseglocke (8) eine innere Kammer enthält, in welcher sich ein Träger für die zu untersuchenden Dichtungsventile (24) befindet, so dass ein innerer Aufsatz dieser Glocke (8) über den oberen Rand der erwähnten Dichtung (24) gestülpt wird, wobei die Analyseglocke (8) ebenfalls über eine äussere Leitung mit zugehörigem Durchflussmesser verfügt, mithilfe derselben der inneren Kammer der Analyseglocke (8) der nötige Druck zugeführt wird, um die Überprüfung und Beurteilung der Verschlussqualität der besagten Dichtung (24) vornehmen zu können.

3. Apparat zur Erkennung defekter Dichtungen bei Druckgasbehältern nach Anspruch **dadurch gekennzeichnet, dass** er zwei Bremsvorrichtungen aufweist, die durch zwei Zylinder (27, 21) gebildet werden, die entweder pneumatisch oder hydraulisch aktiviert werden und die mit den beiden Armen (26, 20) ausgestattet sind, die sich in transversaler Richtung zur Bewegungsrichtung der Behälter ausfahren lassen, wobei diese Bremsvorrichtungen einen Abstand voneinander haben, der ungefähr dem Raum entspricht, der von zwei Behältern (17) eingenommen wird, nachdem sie sich auf dem Transportband (19) befinden, und eine der genannten Bremsen (26) dazu vorgesehen ist, die Aufnahme neuer Behälter zu bestimmen, während die zweite Bremse (20) dazu vorgesehen ist, den Behälter (17) zurückzuhalten, dessen Dichtung überprüft werden soll.

4. Apparat zur Erkennung defekter Dichtungen bei Druckgasbehältern nach Anspruch 3, **dadurch gekennzeichnet, dass** die Wirkung der beiden Bremsvorrichtungen (26, 20) durch spezifische Sensoren reguliert wird, die ihrerseits durch das Vorüberkommen der Behälter auf ihrem Weg aktiviert werden.

5. Apparat zur Erkennung defekter Dichtungen bei Druckgasbehältern nach einer oder mehreren der zuvor genannten Ansprüche, **dadurch gekennzeichnet, dass** er zudem einen Aussonderungsmechanismus aufweist, der aus einem pneumatisch oder hydraulisch aktivierten Zylinder (34) besteht, sowie einem Stossarm (35), der in Funktion gesetzt wird, nachdem die Analyseglocke (8) eine schadhafte Dichtung (24) entdeckt hat, und nachdem der Behälter (17) mit der schadhaften Dichtung einen Sensor (33) ausgelöst hat, der anzeigt, dass der genannte Behälter (17) sich vor dem erwähnten Aussonderungs-mechanismus befindet. Dadurch wird der Stossarm (35) ausgefahren und leitet den erwähnten Behälter auf den Weg um, der für diese Behälter vorgesehen ist, wobei währenddessen die Anlage angehalten und der Behälter mit der schadhaften Dichtung ausgesondert wird, wonach der Zyklus von Neuem beginnt, sobald der Stossarm (35) in seine Ruheposition zurückgekehrt ist.

6. Apparat zur Erkennung schadhafter Dichtungen bei Druckgasbehältern nach einer oder mehreren der zuvor genannten Ansprüche, **dadurch gekennzeichnet, dass** er einen Sensor zur Erkennung eines Rückstaus (37) aufweist, der die gesamte Anlage anhält, während der Zustand des Rückstaus andauert.

## Revendications

1. Un appareil pour la détection de joints défectueux sur les récipients à gaz sous pression, spécialement sur les récipients à gaz liquéfiés de pétrole, particulièrement approprié pour une utilisation sur des installations automatiques de remplissage, l'appareil comprenant un convoyeur à bande sur lequel sont placés les récipients avec les joints qui vont être contrôlés, l'appareil comprenant en plus une structure rigide (1) qui inclut sur sa partie supérieure une plateforme de guidage horizontal (2) sur laquelle sont placées deux pièces cylindriques (15) munies de coussinets internes (16) afin de guider les deux axes d'une unité mobile qui se déplace verticalement (14), unité mobile qui comprend elle-même une base d'appui (3) reliée aux extrémités inférieures des axes cités (14), bielles ou tiges (5) fixées sur la base d'appui (3) par leurs parties supérieures, chaque élément étant placé à pression dans une pièce de séparation concentrique (10) et par un ressort concentrique (6), une plaque de support (7) retenue aux extrémités inférieures de ces bielles ou tiges (5) s'opposant ainsi à l'action de ces ressorts (6), et une cloche d'analyse (8) unie à la plaque de support (7), l'unité mobile étant prête à descendre ou s'élever par un cylindre activé pneumatiquement ou hydrauliquement (4) et retenu par cette plateforme (2), l'axe (11) de ce cylindre se trouvant uni à cette base d'appui (3).

2. Un appareil pour la détection de joints défectueux sur récipients à gaz sous pression, selon la revendication 1, **caractérisé en ce que** la cloche d'analyse (8) citée possède une chambre interne dans laquelle se trouve un porteur de soupapes du joint (24) qui va être contrôlé, de façon à ce qu'un élément d'appui interne de cette cloche (8) demeure appuyé contre le rebord supérieur du joint (24) cité, l'espace de la cloche d'analyse (8) disposant également d'un conduit interne, équipé de son débitmètre correspondant, fournissant à la chambre interne de la cloche d'analyse (8) la pression nécessaire afin d'effectuer le contrôle de l'étanchéité prévu pour le joint (24) mentionné.

3. Un appareil pour la détection de joints défectueux sur récipients à gaz sous pression, selon la revendication 1, **caractérisé par** l'équipement de deux dispositifs de freinage formés par deux cylindres (27, 21) activés pneumatiquement ou hydrauliquement, équipés de deux bras (26, 20) extensibles transversalement par rapport à la direction de déplacement des récipients, ces dispositifs de freinage étant séparés par une distance environ équivalente à l'espace occupé par deux récipients (17) une fois placés sur la bande de transport (19), et un des freins (26) étant équipé pour déterminer l'admission de nouveaux récipients tandis que le deuxième frein (20) est équipé pour retenir le récipient (17) dont le joint a été contrôlé.

4. Un appareil pour la détection de joints défectueux sur récipients à gaz sous pression, selon la revendication 3, **caractérisé en ce que** l'action de ces dispositifs de freinage (26, 20) est régulée par des détecteurs spécifiques activés par le passage des récipients le long de leur parcours.

5. Un appareil pour la détection de joints défectueux sur récipients à gaz sous pression selon une ou plusieurs des revendications précédantes, **caractérisé en ce qu'**il est, en plus, équipé d'un mécanisme d'expulsion formé d'un cylindre (34) activé pneumatiquement ou hydrauliquement, muni d'un bras de poussée (35), qui entre en fonctionnement après que la cloche d'analyse (8) ait détecté un joint défectueux (24), et lorsque le récipient (17) portant ce joint défectueux a activé un détecteur (33) indiquant que ce récipient (17) est situé devant ce mécanisme d'expulsion par lequel le bras de poussée (35) s'étend et dévie ce récipient, l'unité se trouve arrêtée tandis que le récipient au joint défecteux est dévié, et le cycle ne recommence que lorsque le bras de poussée revient à sa position de repos.

6. Un appareil pour la détection de joints défectueux sur récipients à gaz sous pression, selon une ou plusieurs des revendications précédantes, **caractérisé en ce qu'**il est équipé d'un détecteur de blocages (37) arrêtant toute l'unité tant que dure le blocage.
